# EUROPEAN PATENT SPECIFICATION

(11) **EP 0 928 137 B1**
(45) Date of publication and mention of the grant of the patent: **05.09.2001**
(21) Application number: 97942296.1
(22) Date of filing: 26.09.1997
(51) Int. Cl.: A21B 1/26, A21B 1/48

(54) **DEVICE FOR THE TREATMENT OF FOOD PRODUCTS**
GERÄT FÜR DIE BEHANDLUNG VON NAHRUNGSMITTELN
DISPOSITIF DE TRAITEMENT DE PRODUITS ALIMENTAIRES

(30) Priority: 27.09.1996 NL 1004136
(43) Date of publication of application: 14.07.1999
(73) Proprietor: Kaak, Johan Hendrik Bernard, 7011 DZ Gaanderen (NL)
(72) Inventor: PASCH, Lothar, NL-7071 GA Terborg (NL)
(74) Representative: Ferguson, Alexander
(86) International application number: NL9700539
(87) International publication number: WO9812926

(56) References cited:
- EP-A- 0 710 441
- WO-A-96/27293

## Description

The present invention relates to a device for treating food products, especially for baking dough, in which the food product is accommodated in product holders, the device being provided with at least two lift compartments arranged next to each other, each with supporting members for carrying the product holders, the one lift compartment for intermittently conveying the product holders upward and the other lift compartment for intermittently conveying the product holders downward, with a transfer device for transferring product holders at the top of the lift compartments from the one lift compartment to the other, with means for blowing air through zones of the lift compartment transverse to the conveyance direction of the lift compartment, said means for blowing air through zones of a lift compartment containing at least one ventilator per zone, and with elements for bringing the air to a certain temperature per zone of the lift compartment.

Such a device is known from International patent application WO 96/27293. In said application among others a baking oven is described in which the lift compartments contain dough holders which are stacked on top of one another. In this baking oven two baking zones are present. The temperature. in these two baking zones can be different. For heating the pieces of dough in the baking oven heated air is supplied by supply channels and directed towards the pieces of dough on the product holders. The air supply channels of each baking zone are connected to a separate ventilator which blows air through the channels.

Another device is known from International patent application WO 90/06057. In said application among others a baking oven is described in which the lift compartments contain dough holders which are stacked on top of one another, in which the adjacent dough holders contact each other. For heating the air in the baking oven air supply channels arranged on both sides of the lift compartments are used. The air supply channels are connected to one single ventilator which blows air through the channels. The air supply channels are provided with air exit openings in the shape of slots, which are positioned on both sides of each lift compartment, in which the openings are arranged alternately on the one side and the other side of the lift compartment and the distance between them is equal to the height of a dough holder. In this way it is realized that the air is blown virtually horizontal in zones through the lift compartments, in which the direction of the air flow in two adjacent zones, is opposite, because of which during the upward or downward movement of the dough holders a more uniform heating of the dough holders, and therefore of the dough present in there, is being realized. Separate heating elements are placed in front of the air exit openings, said elements being able to effect a certain temperature per zone. Although in this baking oven several temperature zones situated on top of one another can be created, the baking results obtained by this known baking oven can be adversely influenced by the following points. By using relatively long air supply channels with slot-shaped openings, the distribution of air pressure in the air pressure channels may vary in an unwanted and uncontrolled -way. In this way the air flow which comes out of the one opening may be different from the one coming out of another opening, which leads to uncontrolled heating of the dough in the dough holders. Furthermore it is not possible to have the direction of the air flow in one zone changed, which is desirable for uniform heating of some dough products. Moreover the dough holders are stacked on one another because of which the heated air cannot stream along the bottom or the top of the dough holders, resulting in the surface of the dough holder to be heated being small and the duration of heating needing to be extended correspondingly. Furthermore a very large number of heating elements is needed, one per exit opening, which renders the construction of the baking oven complex and expensive.

It is an object of the invention to provide an improved device for treating food products, especially for baking dough.

For this purpose a device for treating food products of the above-mentioned kind is according to the invention characterized in that each lift compartment comprises two pairs of endless supporting chains, in that each pair of endless supporting chains carries supporting members for supporting the product holders at their edges, in that the distance between adjacent supporting members is sufficiently large to allow air circulation around the product holders, and in that the device comprises means for directing the air at the lower side of the product holders. As a result; of this construction it is possible to heat the bottom and top of a product holder, which contributes to a quick and uniform heating of the product in the holders. Moreover the product holders can be made as plates because of this construction, on which plates the dough or food product can rest, so that the air, for instance heated, can reach the dough or the food product. This improves the uniform treatment of the product, for instance baking. The product holders or product plates are preferably supported by angled profiles. In the inventive device a uniform food product treatment, in particular of dough placed on dough plates, is obtained in particular by the means for directing air at the bottom of the product holders, so that the lower side of the food product is sufficiently uniformly treated, for instance heated, in comparison to the rest of the food product.

Although the device according to the invention is especially suitable for baking dough, the device can also be applied in other treatments of dough, such as the cooling of dough, or the treatment of meat products or other food products.

An embodiment of the device according to the invention is characterized in that the means for blowing air through a zone of a lift compartment recirculate the air in said zone. By recirculating air in a zone only in that particular zone, an accurate temperature regulation will thus be possible.

A further preferred embodiment of a device according to the invention is characterized in that the means for blowing air through the zones of a lift compartment can selectively blow the air in the zone in one of two opposite directions. In this way it is possible to reverse the air flow in one zone, because of which an extremely uniform heating of the food product or the pieces of dough in the holders is possible.

Some embodiments of a device for treating food products according to the invention, are by way of example described on the basis of the drawing, in which:
figure 1 shows schematically in perspective a U-shaped baking oven for baking dough accommodated in dough holders,
figure 2 shows schematically in perspective an in-line baking oven for baking dough accommodated in dough
holders,
figure 3 shows schematically a side view of an in-line baking oven according to the invention,
figure 4 shows schematically a front view of the in-line baking oven according to figure 3,
figure 5 shows schematically a view along arrow V in figure 3 of the in-line baking oven according to the invention,
figure 6 shows schematically a cross-sectional view along the line VI-VI in figure 3 of the in-line baking oven according to the invention,
figure 7 shows schematically an L-shaped supporting member with positioning cams for the dough holders,
figure 8 shows schematically the placing and taking away of the dough holders on and from a supporting member with positioning cams, and
figure 9 shows schematically a construction of a supporting chain of a baking oven according to the invention.

The invention will be described on the basis of a baking oven as device for treating dough, although the invention surely is applicable in among others refrigerators, pasteurizing cases, rising cases and the like and for treating other food products such as meat.

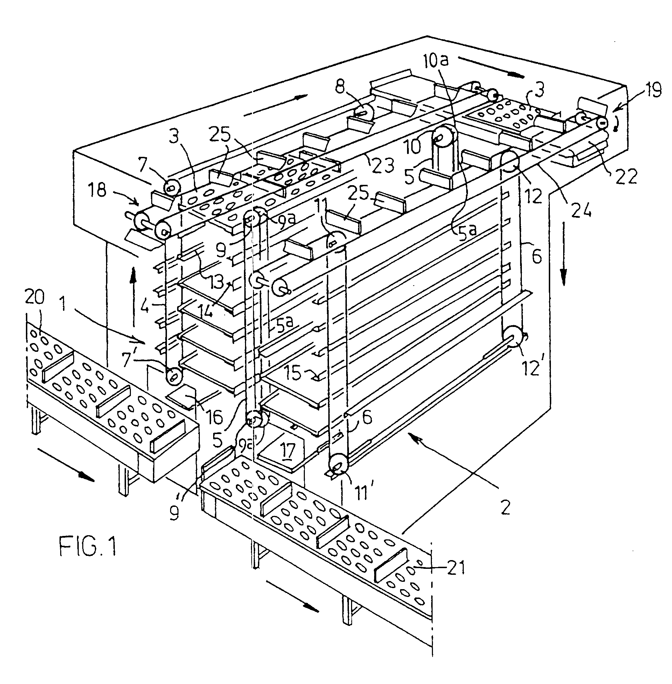

The U-shaped baking oven shown in figure 1 contains two case departments or lift compartments 1, 2, parallel to each other, in which the almost rectangular dough holders 3, or dough plates, are conveyed intermittently upward and downward respectively according to the indicated arrows.

The case department 1 comprises on both sides a pair of endless supporting chains 4, which are guided around chain wheels 7, 7' and 8 and a pair of endless supporting chains 5 which are guided around chain wheels 9, 9' and 10. Likewise case department 2 comprises on both sides a pair of endless supporting chains 6 which are guided around chain wheels 11, 11' and 12, and a pair of endless supporting chains 5a which are guided around chain wheels 9a, 9a' and 10a. The pairs of supporting chains 4, 5, 5a and 6 carry supporting members 13, 14, 15 for dough holders 3, said supporting members may be formed by for instance T-shaped joists, or preferably by L-shaped angled profiles.

In each case department 1, 2 an entry conveyor 16 and exit conveyor 17 respectively is present at the bottom, whereas at the top in each case department 1, 2 a transfer device is present which in this example is formed by two take-away devices 18, 19 and a transfer conveyor 22, to which the dough holders 3 are transferred by the take-away device 18, whereas the take-away device 19 takes over the dough holders from the transfer conveyor and enters them at the top in the case department 2.

Finally a supply conveyor 20 is connected to the entry conveyor 16 and a transport conveyor 21 is connected to the exit conveyor.

The take-away devices 18, 19 are for instance formed by rotating chains 23, 24 on which take-away partitions 25 are arranged. The take-away partitions 25 are spaced at such a distance from each other that between the adjacent take-away partitions 25 a dough holder 3 can be located. The take-away partitions 25 of take-away device 18 push and slide the dough holders of case compartment 1 to and on the transfer conveyor 22 and the take-away partitions 25 of the take-away device 19 push and slide the dough holders from the transfer conveyor 22 in the case department. Additionally the transfer device can be a transfer device which at least almost frictionless transfers the dough holders from case department 1 to case department 2.

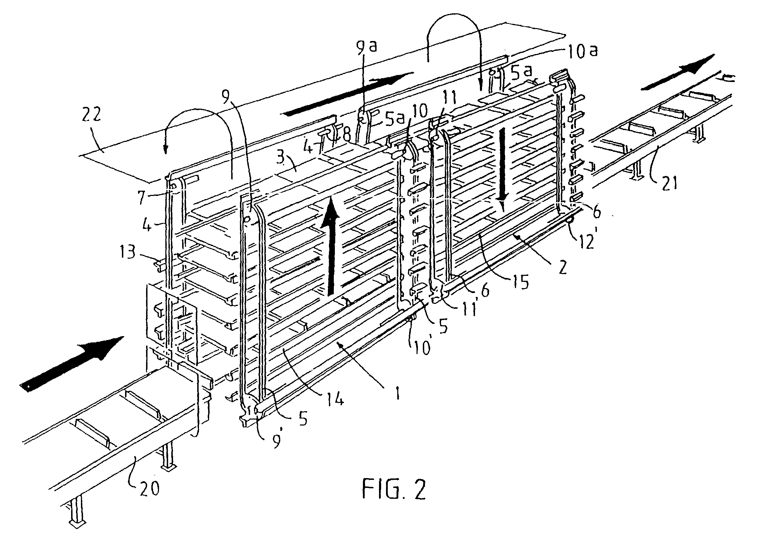

Another embodiment of a device for treating dough is shown in figure 2. In this embodiment the case departments 1, 2 are in line, and is called an in-line baking oven.

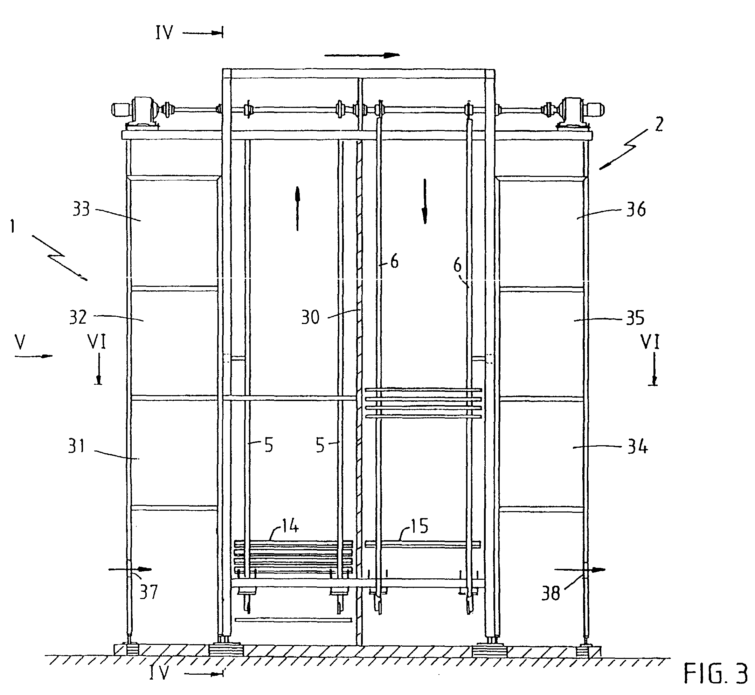

The baking ovens are provided with means for blowing air through zones of the lift compartment transverse to the conveyance direction and with elements for bringing the air to a certain temperature per zone of a lift compartment, so that heated air can flow along the dough holders for baking the dough accommodated therein at a desired temperature. These means and elements are not indicated in figures 1 and 2 in order not make these figures unnecessarily unclear. The placing of these means and elements will be described for an in-line baking oven on the basis of the description of the figures 3-6. The placing of these means and elements for a U-shaped baking oven is analogous to this and will be clear to a skilled person, so that a description of it is not included.

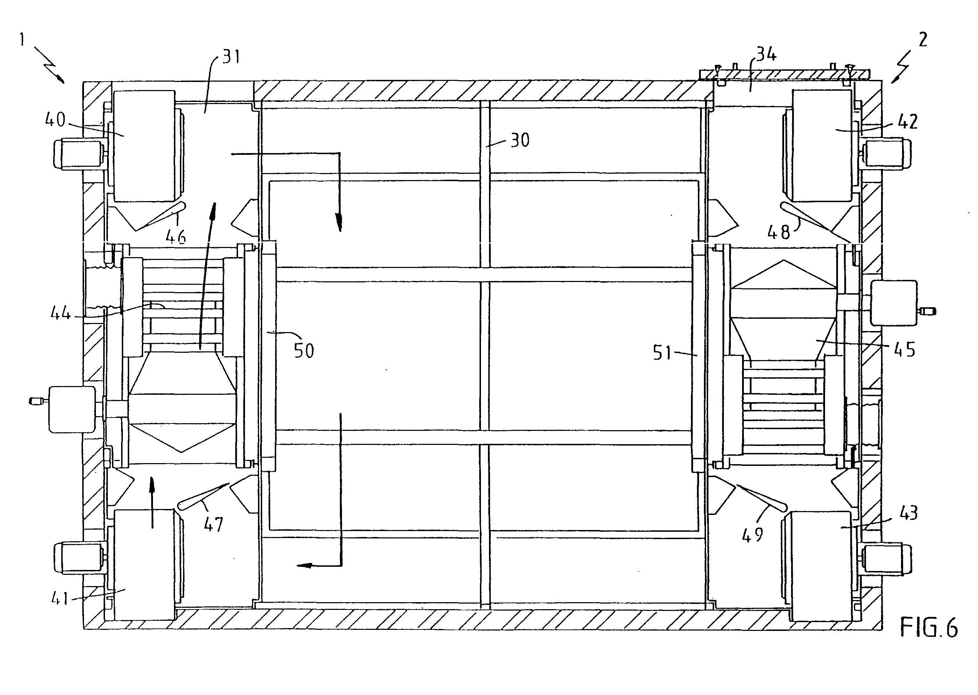

In figure 3 a side view of an in-line baking oven according to the invention is schematically shown. Each lift compartment 1, 2 contains spaces 31, 32, 33 and 34, 35, 36 respectively in which a part of the lift compartment is accommodated. Each space contains at least one ventilator for blowing air in the accompanying part of the lift compartment in which way zones in the lift compartments are formed. Each space also contains a heating element for bringing the air in the zone concerned to a certain temperature. A possible placing of ventilators and heating elements will be described on the basis of figure 6. The schematic indication of figure 3 is used herein to elucidate the division of the lift compartments in zones.

In this example the number of zones per lift compartment is three, although another number is also possible. The height of one zone preferably is such that several dough holders can be in one zone at the same time.

Because each zone has its own heating element it is possible to effect different temperatures per zone. Additionally it is possible to vary the power of the ventilators per zone, in which way the size of the air flow per zone is adjustable. In this way it is possible to adjust the desired temperature path in the lift compartment depending on the dough product or for getting a certain baking process. In order to prevent that the air flows and as a result of that the heat flowing from the one lift compartment to the other, a partitioning wall 30 is arranged between the lift compartments 1 and 2. Because of the substantially horizontal air flow in a zone it is not necessary to separate the zones from each other. Without separation a gradual temperature course even appears to be present between the zones which makes the baking process become more regular. Moreover a recirculation of the air in one and the same zone is possible in a simple way, which provides a better control of the heating management in the baking oven.

When the baking oven is operative the dough holders end up in the lift compartment 1 via an opening 37. The dough holders are preferably carried by supporting members 14, 15 which support the dough holders only at their edges, such as preferably angled profiles. The distance between the adjacent supporting members is preferably large enough for allowing free circulation of hot air around the dough holders, so that the dough placed in or on the dough holders is uniformly heated.

By intermittent driving of the supporting chains 5 the dough holders move upward in the lift compartment 1, in which the three temperature zones 31, 32, 33 each with a desired temperature and air flow size, are passed through. On the top of the lift compartment dough holders are transferred to lift compartment 2 where the dough holders are intermittently conveyed downward and pass through the temperature zones 36, 35 and 34, after which the are transported out of the baking oven via opening 38 in order to be further treated.

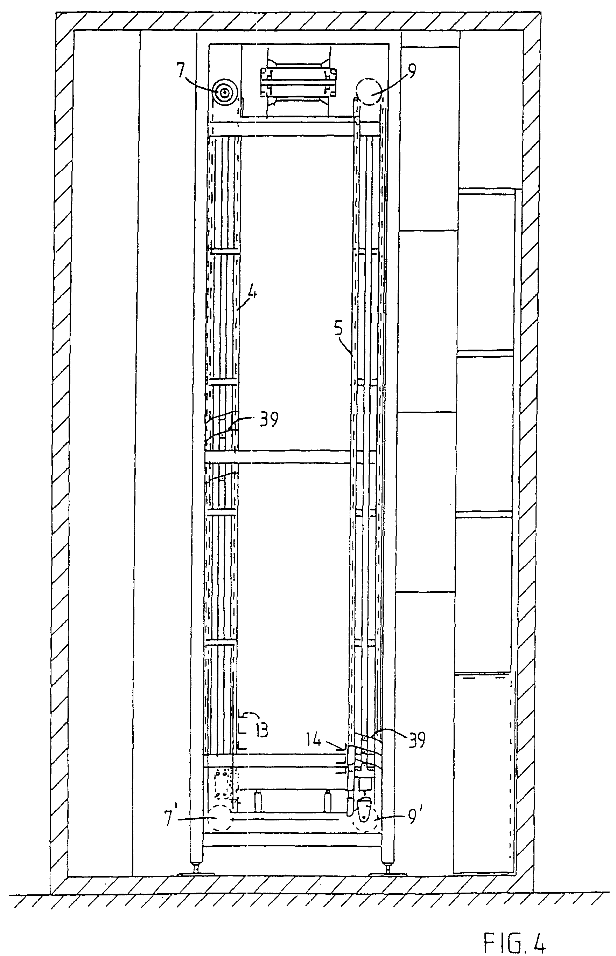

In the front view of the baking oven in figure 4 pivotable plates 39 can be seen which direct the air blown in the zones to a desired place of the dough holders, in particular the bottom of the dough holders, in order to also realize a correct heating of particularly the lower side of the dough resting on the dough holders. The pivotable plates 39 are preferably attached to the frame of the supporting chains in order to limit the number of components and to optimize the use of space in the baking oven. The pivotable plates 39 can be placed in either one fixed position or when the baking oven is operative, which is during the upward and downward conveyance of the dough holders, take a variable position in order to realize a desired air flow direction and heating for, for instance, sensitive dough products. Other means for directing the air to a desired place of the dough holders are also possible such as a plate with air directing channels placed adjacent to the dough holders.

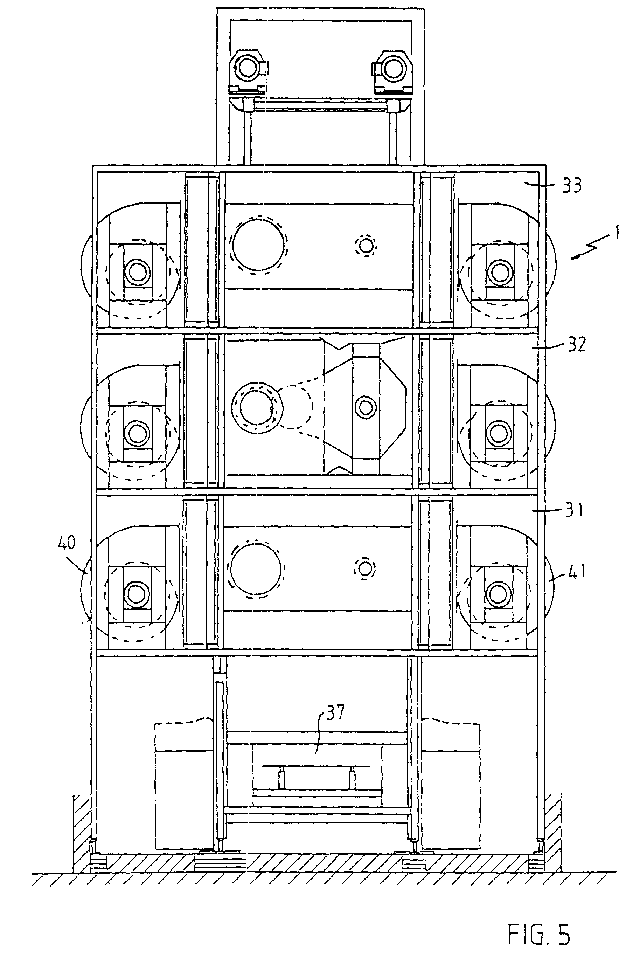

In the schematical view seen from the direction V indicated in figure 3 of the baking oven according to the invention as shown in figure 5 it can be seen that each zone (for instance zones 31) has two ventilators, as also appears from the cross-sectional view of lift compartment 1 shown in figure 6 (cross section along line VI-VI in figure 3). By using two ventilators 40, 41 it is possible to reverse the direction of the recirculating air in the zone which also leads to a more uniform heating or baking process. Reversing the direction of circulation is regulated by operating two lids 46, 47. In the drawn example the air flows as indicated by the arrows and passes a heating element 44 which is separated by a wall 50 from the dough holders which move upwards. Other ways to generate a reversible direction of circulation in the zones are for instance the use of one single ventilator which is reversible, or a ventilator with pivotable vanes. Because of the possibility that air can run through the zone in two directions, pivotable plates 39 are, as indicated in figure 4, placed on both the frame of the supporting chain 4 and on the frame of supporting chain 5.

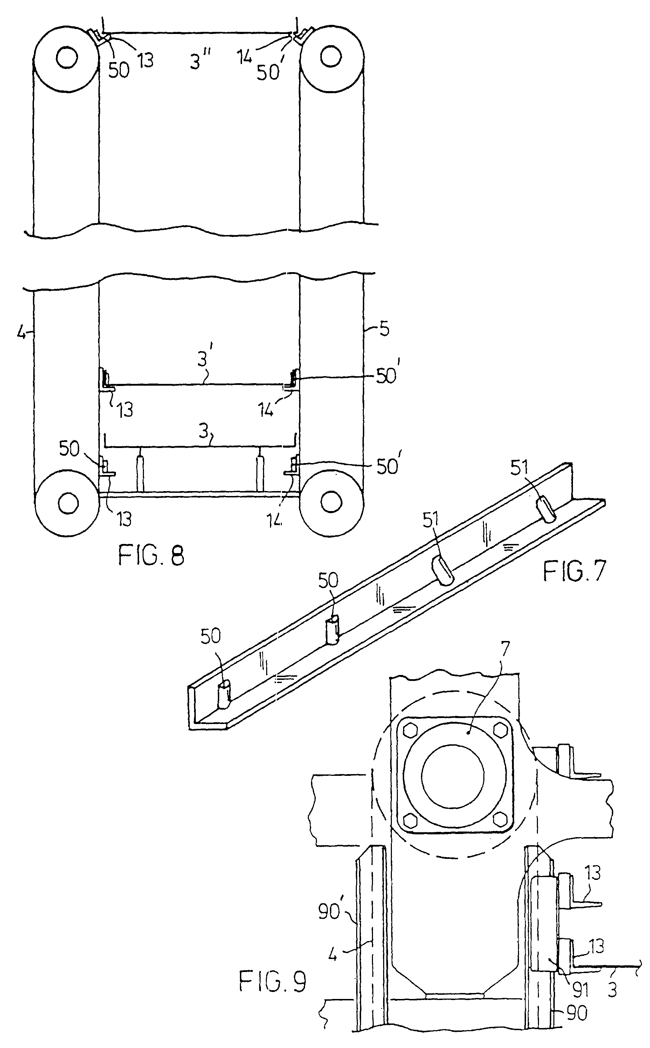

By directing the air at, for instance, the lower side of the dough holders, vibrations can be generated with certain, particularly lighter dough holders, which vibrations may change the position of the dough holders on the T- or L-shaped supporting members, which may be disadvantageous for later treatments. In order to keep the dough holders correctly positioned when the baking oven, or a different treating device, is operative, the T- or L-shaped supporting members 13 are provided with positioning cams (50, 51, as indicated in figure 7) in between which the dough holders can be placed. In figure 7 a L-shaped supporting member 13 is indicated, but it will be clear that the positioning cams can also be placed on other supporting members. The positioning cams can have a variety of shapes, so long as they can determine the position of the dough holders. In figure 7 as an example round erect positioning cams 50 and slantingly placed rectangular positioning cams 51 are shown.

Because of the positioning cams the dough holders cannot easily be slided on or from the supporting members, but the placing and taking away of the dough holders on the supporting members needs to be adjusted, such as will be explained on the basis of figure 8. The supporting chains 4 and 5 of the lift compartment for moving the dough holders 3, 3' and 3'' upward carry supporting members 13, 14 respectively, each provided with positioning cams 50, 50' respectively. To place the dough holder 3 between the positioning cams on the supporting members, said dough holder 3 is lifted to a level above the positioning cams and shifted to a position in between the adjacent positioning cams, after which the dough holder 3 is let down until it rests on a supporting member. In figure 8 a dough holder 3' is schematically shown which is positioned in between the positioning cams, so that the vibrations caused by the air flow cause an unwanted change of position.

Taking away the dough holders from the supporting members can take place analogous by lifting the dough holders from the supporting members to a level above the positioning cams and then further removing the dough holders. Alternatively, as is schematically indicated by dough holder 3'', dough holder 3'' is conveyed to such a level that the dough holder 3'' is only supported by the edge of the supporting members which are in a slanting position. In this position the dough holder 3'' is no longer held or positioned between the positioning cams and can simply be slided from the supporting members.

Because of the vibrations in the dough holders possibly generated by the air flow forces can work on the supporting chains, which may cause considerable wear of these supporting chains. Especially in a baking oven in which high temperatures increase this wear, frequent replacement of the supporting chains would be necessary which entails a lot of costs. In order to decrease these forces on the supporting chains each supporting chain 4 (indicated in figure 9 by a discontinuous line) is guided in a U-profile 90, 90'. The open portion of the U-profile of the one supporting chain 4 of the pair of supporting chains 4 (see for instance figure 2) is turned away from the other supporting chain of the pair. On the supporting chain 4 attachment members 91, for instance an angled profile are arranged which thus protrude from the open portion of the U-profile. A supporting member 13 for the dough holder 3 is at its one end attached to the attachment member 91 of the one supporting chain 4 and on the other end to the attachment member of the other supporting chain. By this construction forces which work via the supporting members on the supporting chains are decreased which leads to a longer duration of use.

## Claims

1. Device for treating food products, especially for baking dough, in which the food product is accommodated in product holders, the device being provided with at least two lift compartments arranged next to each other, each with supporting members for carrying the product holders, the one lift compartment for intermittently conveying the product holders upward and the other lift compartment for intermittently conveying the product holders downward, with a transfer device for transferring product holders at the top of the lift compartments from the one lift compartment to the other, with means for blowing air through zones of the lift compartment transverse to the conveyance direction of the lift compartment, said means for blowing air through zones of a lift compartment containing at least one ventilator per zone, and with elements for bringing the air to a certain temperature per zone of the lift compartment, **characterized in that** each lift compartment comprises two pairs of endless supporting chains, in that each pair of endless supporting chains carries supporting members for supporting the product holders at their edges, in that the distance between adjacent supporting members is sufficiently large to allow air circulation around the product holders, and in that the device comprises means for directing the air at the lower side of the product holders.

2. Device according to claim 1, **characterized in that** the supporting members are angled profiles.

3. Device according to claim 1 or 2, **characterized in that** the means for directing the air are swayable plates.

4. Device according to any one of the preceding claims, **characterized in that** the supporting members are provided with positioning cams for positioning the product holders.

5. Device according to any one of the preceding claims, **characterized in that** each supporting chain of a pair is guided in a U-profile, in which the open portion of the U-profile of the one supporting chain of the pair is turned away from the other supporting chain of the pair, in that on each supporting chain of a pair an attachment member is arranged, and in that a supporting member is attached at one end to the attachment member of the one supporting chain and at the other end to the attachment member of the other supporting chain.

6. Device according to any one of the preceding claims, **characterized in that** the means for blowing air through a zone of a lift compartment recirculate the air in said zone.

7. Device according to any one of the preceding claims, **characterized in that** the means for blowing air through zones of a lift compartment can selectively blow the air in the zone in one of two opposite directions.

8. Supporting member for use in a device according to any one of the preceding claims, **characterized in that** the supporting member is provided with positioning cams.

## Patentansprüche

1. Vorrichtung zum Behandeln von Lebensmittelprodukten, insbesondere zum Backen von Teig, wobei das Lebensmittelprodukt in Produktbehältern aufgenommen ist, welche Vorrichtung mit zumindest zwei nebeneinander aufgestellten Aufzugsabteilen, jedes mit Unterstützungsteilen zum Tragen von Produktbehältern, das eine Aufzugsabteil zum intermittierend hoch Transportieren der Produktbehälter und das andere Aufzugsabteil zum intermittierend hinunter Transportieren der Produktbehälter, mit einer Übertragungsvorrichtung zum an der Oberseite der Aufzugsabteile Übertragen der Produktbehälter von dem einen zu dem anderen Aufzugsabteil, mit Mitteln zum quer auf der Förderrichtung eines Aufzugsabteiles Blasen von Luft durch Zonen des Aufzugsabteiles, wobei die Mittel zum Blasen von Luft durch Zonen eines Aufzugsabteiles pro Zone zumindest einen Ventilator umfassen und mit Teilen zum auf eine bestimmte Temperatur Bringen der Luft pro Zone des Aufzugsabteiles, versehen ist, **dadurch gekennzeichnet,** daß jedes Aufzugsabteil zwei Paar endlose Stützketten umfaßt, daß jedes Paar der endlosen Stützketten Unterstützungsteile tragen zum Unterstützen der Produktbehälter an ihrem Rand, daß der Abstand zwischen angrenzenden Unterstützungsteilen groß genug ist zum Gestatten von Luftzirkulation um die Produktbehälter, und daß die Vorrichtung Mittel zum Richten von der Luft zu der Unterseite der Produktbehälter umfaßt.

2. Vorrichtung gemäß Anspruch 1, **dadurch gekennzeichnet,** daß die Unterstützungsmittel Eckprofile sind.

3. Vorrichtung gemäß Anspruch 1 oder 2, **dadurch gekennzeichnet,** daß die Mittel zum Richten der Luft schwenkbare Platten sind.

4. Vorrichtung gemäß einem der vorhergehenden Ansprüche, **dadurch gekennzeichnet,** daß die Unterstützungsteile mit Positionierungsnocken zum Positionieren der Produktbehälter versehen sind.

5. Vorrichtung gemäß einem der vorhergehenden Ansprüche, **dadurch gekennzeichnet,** daß jede Stützkette eines Paars in einem U-Profil geführt ist, wobei das offene Teil des U-Profils von der einen Stützkette des Paars von der anderen Stützkette des Paars abgekehrt ist, daß an jeder Stützkette eines Paars ein Befestigungsteil angeordnet ist, und daß ein Unterstützungsteil an einem Ende an dem Befestigungsteil der einen Stützkette und an dem anderen Ende an dem Befestigungsteil der anderen Stützkette befestigt ist.

6. Vorrichtung gemäß einem der vorhergehenden Ansprüche, **dadurch gekennzeichnet,** daß die Mittel zum Blasen von Luft durch eine Zone eines Aufzugsabteiles die Luft in dieser Zone in den Kreislauf zurückführen.

7. Vorrichtung gemäß einem der vorhergehenden Ansprüche, **dadurch gekennzeichnet,** daß die Mittel zum Blasen von Luft durch die Zonen eines Aufzugsabteiles die Luft in der Zone nach Wahl in eine der zwei entgegengesetzten Richtungen blasen kann.

8. Unterstützungsteil zum Gebrauch in einer Vorrichtung gemäß einem der vorhergehenden Ansprüche, **dadurch gekennzeichnet,** daß das Unterstützungsteil mit Positionierungsnocken versehen ist.

## Revendications

1. Dispositif pour le traitement de produits alimentaires, spécialement pour de la pâte à cuire, dans lequel le produit alimentaire est logé dans des supports à produit, le dispositif étant muni d'au moins deux compartiments de levage agencés près l'un de l'autre, chacun équipé d'éléments support pour porter les supports à produit, le premier compartiment de levage devant convoyer de façon intermittente les supports à produit, vers le haut et l'autre compartiment de levage devant convoyer de façon intermittente les supports à produit vers le bas, avec un dispositif de transfert pour transférer les supports à produit en partie haute des compartiments de levage depuis le premier compartiment de levage vers l'autre, avec des moyens pour souffler de l'air par certaines zones du compartiment de levage, transversalement à la direction de transport du compartiment de levage, lesdits moyens de soufflage d'air par certaines zones d'un compartiment de levage contenant au moins un ventilateur par zone, et avec des éléments pour amener l'air à une certaine température par zone du compartiment de levage, **caractérisé en ce que** chaque compartiment de levage comprend deux paires de chaînes support sans fin, en ce que chaque paire de chaînes support sans fin porte des éléments support pour supporter les supports à produit au niveau de leurs bords, en ce que la distance entre des éléments support adjacents est suffisamment grande pour permettre à l'air de circuler autour des supports à produit, et en ce que le dispositif comprend des moyens pour diriger l'air du côté inférieur des supports à produit.

2. Dispositif selon la revendication 1, **caractérisé en ce que** les éléments support sont des profils en cornière.

3. Dispositif selon la revendication 1 ou 2, **caractérisé en ce que** les moyens pour diriger l'air sont des plaques susceptibles d'osciller.

4. Dispositif selon l'une quelconque des revendications précédentes, **caractérisé en ce que** les éléments support sont munis de cames de positionnement, afin de positionner les supports à produit.

5. Dispositif selon l'une quelconque des revendications précédentes, **caractérisé en ce que** chaque chaîne support d'une paire est guidée dans un profilé en U, dans lequel la partie ouverte du profilé en U d'une chaîne support de la paire est tournée à distance dans le sens de l'écartement vis-à-vis de l'autre chaîne support de la paire, en ce que, sur chaque chaîne support d'une paire, est agencé un élément de fixation, et en ce qu'un élément support est fixé, à une extrémité, à l'élément de fixation d'une chaîne support et, à l'autre extrémité, à l'élément de fixation de l'autre chaîne support.

6. Dispositif selon l'une quelconque des revendications précédentes, **caractérisé en ce que** les moyens pour souffler de l'air par une zone d'un compartiment de levage produisent une recirculation de l'air dans ladite zone.

7. Dispositif selon l'une quelconque des revendications précédentes, **caractérisé en ce que** les moyens pour souffler de l'air par des zones d'un compartiment de levage peuvent sélectivement souffler l'air dans la zone, dans l'une parmi deux directions opposées.

8. Elément support pour utilisation dans un dispositif selon l'une quelconque des revendications précédentes, **caractérisé en ce que** l'élément support est pourvu de cames de positionnement.
